# EUROPEAN PATENT APPLICATION

(11) **EP 4 195 066 A1**
(43) Date of publication of application: **14.06.2023**
(21) Application number: 22160174.3
(22) Date of filing: 04.03.2022
(51) Int. Cl.: G06F 16/27, H04L 9/40

(54) **METHOD OF DATABASE REPLICATION AND DATABASE SYSTEM USING THE SAME**

(30) Priority: 09.12.2021 US 202163287953 P; 17.02.2022 US 202217673811
(71) Applicant: BlackBear (Taiwan) Industrial Networking Security Ltd., Jubei, Hsinchu 302058 (TW)
(72) Inventor: Chan, Yuan Chen, 302058 Jubei, Hsinchu (TW); Hsu, Po-Chih, 500 Changhua City (TW)
(74) Representative: 2K Patentanwälte Blasberg Kewitz & Reichel

(57) **Abstract**

A method of database replication and a database system using the same method are provided, wherein the method includes: coupling a switch to a first database and a filter, wherein the switch mirrors a data packet of the first database to the filter, wherein the filter adds a header to the data packet; and coupling a master receiver to the filter and a second database, wherein the master receiver receives the data packet from the filter and performs an inspection for the data packet according to the header, wherein the master receiver transmits the data packet to the second database in response to the data packet passing the inspection.

## Description

### BACKGROUND

### Technical Field

The disclosure is directed to a method of database replication and a database using the same method.

### Description of Related Art

For any operation technology (OT) system in a secured site (or OT site), one or more databases would be present normally. The database in the secured site, as well as its subsequent updates, may need to be reproduced on an information technology (IT) site (or IT site) for purposes of, for example, backup, monitoring, or data analysis. In order to maintain the security of the OT system, a one-way link that allows data flow from the OT site to the IT site, but not from the IT site to the OT site, is an ideal route to transfer the information of the database in the secured site. However, there is no way to ensure or verify the integrity of the data transmitted from the OT site to the IT site. Therefore, how to prevent an error from occurring in the replicated database is an important issue.

### SUMMARY

The disclosure is directed to a method of database replication and a database using the same method. The disclosure provides a way to guarantee any copy or subsequent update in the unsecured site is accurate and untampered with.

The disclosure is directed to a database system for database replication. The database system including a first database, a filter, a switch, a second database, and a master receiver. The switch is coupled to the first database and the filter, wherein the switch mirrors a data packet of the first database to the filter, wherein the filter adds a header to the data packet. The master receiver is coupled to the filter and the second database, wherein the master receiver receives the data packet from the filter and performs an inspection for the data packet according to the header, wherein the master receiver transmits the data packet to the second database in response to the data packet passing the inspection.

In an exemplary embodiment of the disclosure, the master receiver receives the data packet from the filter via a first one-way link circuit.

In an exemplary embodiment of the disclosure, the database system further including a slave receiver. The slave receiver is coupled to the filter and the master receiver, wherein the filter generates a redundant data packet of the data packet with the header, wherein the slave receiver receives the redundant data packet from the filter and forwards the redundant data packet to the master receiver.

In an exemplary embodiment of the disclosure, the master receiver transmits the redundant data packet to the second database in response to the data packet failing the inspection.

In an exemplary embodiment of the disclosure, the master receiver performs a second inspection for the redundant data packet and transmits the redundant data packet to the second database in response to the redundant data packet passing the second inspection.

In an exemplary embodiment of the disclosure, the master receiver discards the redundant data packet in response to the redundant data packet failing the second inspection.

In an exemplary embodiment of the disclosure, the master receiver receives the redundant data packet from the filter via a second one-way link circuit.

In an exemplary embodiment of the disclosure, the master receiver discards the data packet in response to the data packet failing the inspection, wherein the database system further including a diagnosis device. The diagnosis device is coupled to the master receiver, wherein the diagnosis device receives the data packet discarded by the master receiver and outputs a report according to the data packet.

In an exemplary embodiment of the disclosure, the header includes a sequence number corresponding to a data stream, wherein the master receiver performs the inspection according to the sequence number.

In an exemplary embodiment of the disclosure, the first database generates a first event log associated with the data packet and transmits the first event log to the second database, wherein the second database generates a second event log associated with the data packet and outputs a report associated with a comparison result between the first event log and the second event log.

In an exemplary embodiment of the disclosure, the master receiver removes the header from the data packet before transmitting the data packet to the second database.

In an exemplary embodiment of the disclosure, the switch transmits the data packet to the filter via a physical layer port, wherein the filter transmits the data packet with the header to the first one-way link circuit via the physical layer port.

The disclosure is directed to a method of database replication , including: coupling a switch to a first database and a filter, wherein the switch mirrors a data packet of the first database to the filter, wherein the filter adds a header to the data packet; and coupling a master receiver to the filter and a second database, wherein the master receiver receives the data packet from the filter and performs an inspection for the data packet according to the header, wherein the master receiver transmits the data packet to the second database in response to the data packet passing the inspection.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 illustrates a schematic diagram of a database system for database replication according to an embodiment of the disclosure.
FIG. 2 illustrates a schematic diagram of the inspection for the data packet according to an embodiment of the disclosure.
FIG. 3 illustrates a flowchart of a method of database replication according to an embodiment of the disclosure.

### DESCRIPTION OF THE EMBODIMENTS

In order to make the disclosure more comprehensible, several embodiments are described below as examples of implementation of the disclosure. Moreover, elements/components/steps with the same reference numerals are used to represent identical or similar parts in the figures and embodiments where appropriate.

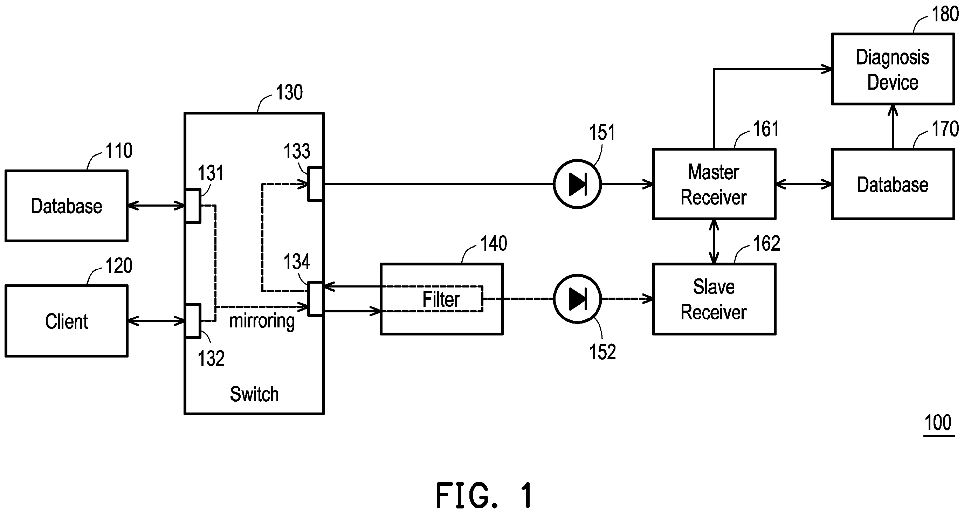

FIG. 1 illustrates a schematic diagram of a database system 100 for database replication according to an embodiment of the disclosure. The database system 100 may include a database 110 in the secured site, a client 120, a switch 130, a filter 140, a one-way link circuit 151, a one-way link circuit 152, a master receiver 161, a slave receiver 162, a database 170 in the unsecured site, and a diagnosis device 180, wherein the database 170 may be the replicated database corresponding to the database 110.

The database system 100 may include a plurality of computing devices such as the database 110, the client 120, the master receiver 161, the slave receiver 162, the database 170, or the diagnosis device 180, wherein the computing devices may be, for example, a server, a user equipment (UE), an advanced mobile station (AMS), a desktop computer, a notebook computer, a network computer, a workstation, a personal digital assistant (PDA), a personal computer (PC), a tablet, or a phone device. Each of the computing devices may include a processor, a storage medium, and a transceiver for performing its own functions.

The switch 130 may include port 131, port 132, port 133, and port 134, wherein each port of the switch 130 may be a physical layer (PHY) port. The port 131, the port 132, and the port 134 may be coupled to each other, and the port 134 may be coupled with the port 133. The switch 130 may connect to the database 110 via the port 131, to the client 120 via the port 132, and to the one-way link circuit 151 via port 133. Accordingly, the database 110 may communicate with the client 120 via the switch 130. Data packets associated with database information (e.g., database query, database update, or database instruction) may be transmitted between the database 110 and the client 120.

The switch 130 may connect to the filter 140 via the port 134. When there is a data packet transmitted between the database 110 and the client 120, the switch 130 may mirror the data packet of the database 110 (i.e., data packet input to or output from the database 110) to the filter140 via the port 134.

The filter 140 may be implemented by an electronic circuit or a programmable logic device (PLD) such as a programmable array logic (PAL), a generic array logic (GAL), a complex PLD (CPLD), or a field programmable gate array (FPGA). The filter 140 may connect to the master receiver 161 via the port 134, the port 133, and the one-way link circuit 151 and the filter 140 may connect to the slave receiver 162 via the one-way link circuit 152. The one-way link circuit 151 may allow a signal be transmitted in the direction from the switch 130 to the master receiver 161 and not allow a signal be transmitted in the direction from the master receiver 161 to the switch 130. The one-way link circuit 152 may allow a signal be transmitted from the filter 140 to the slave receiver 162 and not allow a signal be transmitted in the direction from the slave receiver 162 to the filter 140.

In one embodiment, the one-way link circuit 151 or the one-way link circuit 152 may be implemented by at least one of the followings: a diode circuit, a fiber, a copper, a RJ45 connector, or a FPGA, but the disclosure is not limited thereto. In one embodiment, the one-way link circuit 151 or the one-way link circuit 152 may be implemented by at least one wireless interface such that the signal may be transmitted via the one-way link circuit 151 or the one-way link circuit 152 wirelessly. The one-way link circuit 151 and the one-way link circuit 152 may be implemented by the same or different media.

Database transactions are generally based on TCP/IP protocol. After receiving the data packet mirrored by the switch 130, the filter 140 may process the data packet if the data packet is a TCP/IP packet. Otherwise, the filter 140 may filter the data packet, for example, by dropping the data packet. The filter 140 may process the data packet by adding a header to the data packet, wherein the header may include a sequence number corresponding to a data stream. For example, if the data packet is the first data packet (i.e., the earliest data packet of the data stream) of a data stream, the header of the data packet may include a sequence number "1". If the data packet is the second data packet of a data stream, the header of the data packet may include a sequence number "2".

After the header is added to the data packet, the filter140 may forward the header-added data packet to the master receiver 161 and the slave receiver 162 through two redundant one-way routes. Specifically, the filter 140 may generate a redundant data packet of the data packet with the header so as to obtain two data packets. The filter 140 may forward the data packet with the header (or the redundant data packet with the header) to the master receiver 161 via the port 134, the port 133, and the one-way link circuit 151, and the filter 140 may forward the redundant data packet (or the data packet) to the slave receiver 162 via the one-way link circuit 152. That is, data packets from the filter 140 to the switch 130 and data packets from the switch 130 to the filter 140 may be transmitted via the same port (i.e., port 134). The slave receiver 162 may be connected to the master receiver 161. After the slave receiver 162 receives the redundant data packet from the switch 140, the slave receiver 162 may forward the redundant data packet to the master receiver 161.

In one embodiment, the switch 130, the filter 140, the master receiver 161, or the slave receiver 162 may support enlarged maximum transmission unit (MTU) since the size of the data packet with the added header may exceed the standard MTU.

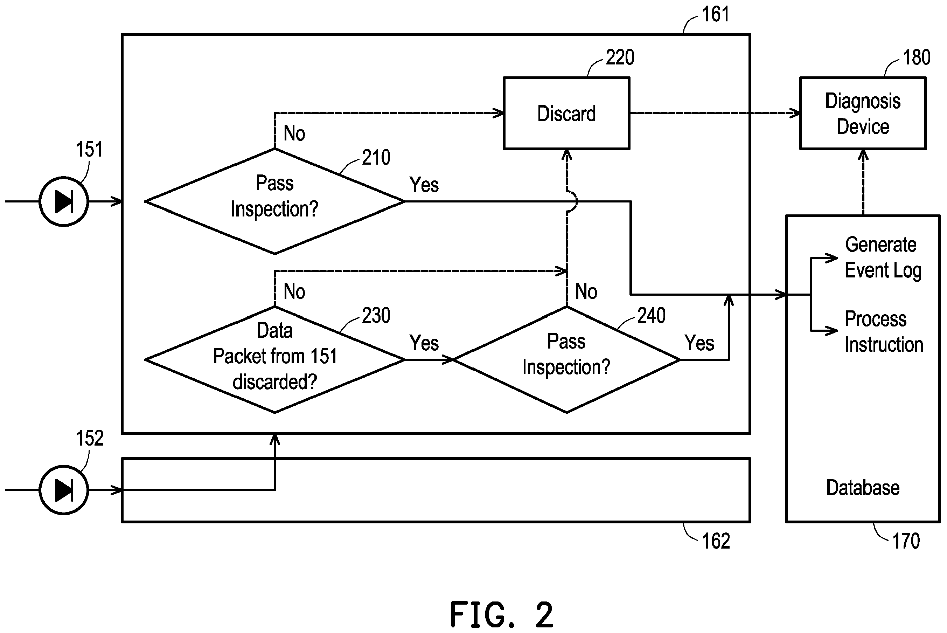

The master receiver 161 may perform an inspection on the data packet received from the one-way link circuit 151 or the slave receiver 162, and the master receiver 161 may determine whether to output the data packet to the database 170 according to the result of the inspection. FIG. 2 illustrates a schematic diagram of the inspection for the data packet according to an embodiment of the disclosure. In step 210, the master receiver 161 may perform an inspection for the data packet from the one-way link circuit 151. If the data packet from the one-way link circuit 151 passes the inspection, the master receiver 161 may transmit the data packet from the one-way link circuit 151 to the database 170. If the data packet from the one-way link circuit 151 fails the inspection, the master receiver 161 may perform step 220 to discard the data packet from the one-way link circuit 151.

The master receiver 161 may perform the inspection for the data packet according to the header, or more specifically, according to the sequence number of the data packet. If the sequence number of the data packet corresponding to a data stream is incorrect, the master receiver 161 may determine that some data packets of the data stream might be lost. Accordingly, the master receiver 161 may determine that the inspection for the data packet is failed. If a data packet from the one-way link circuit 151 fails the inspection, in step 220, the master receiver 161 may discard or drop the data packet from the one-way link circuit 151. The discarded data packet will not be transmitted to the database 170.

In step 230, the master receiver 161 may determine whether the data packet from the one-way link circuit 151 is discarded. If the data packet from the one-way link circuit 151 is discarded (i.e., the determined result of step 210 is "No"), the master receiver 161 may perform step 240. If the data packet from the one-way link circuit 151 is not discarded (i.e., the determined result of step 210 is "Yes"), the master receiver 161 may discard the data packet received from the slave receiver 162 by performing step 220.

In step 240, the master receiver 161 may perform an inspection (also referred to as "second inspection") on the data packet from the slave receiver 162. If the data packet from the slave receiver 162 passes the inspection, the master receiver 161 may transmit the data packet from the slave receiver 162 to the database 170. If the data packet from the slave receiver 162 fails the inspection, in step 220, the master receiver 161 may discard or drop the data packet from the slave receiver 162.

In one embodiment, the master receiver 161 may remove the header from the data packet (e.g., data packet from the one-way link circuit 151 or from the slave receiver 162) before transmitting the data packet to the database 170.

The diagnosis device 180 may be a security operation center (SOC). The diagnosis device 180 may be coupled to the master receiver 161 and the database 170. In one embodiment, the master receiver 161 may transmit a report (or an alert) to the diagnosis device 180 in response to discarding a data packet, wherein the report may include the data packet discarded by the master receiver 161 or the report may indicate the occurrence of the header error corresponding to the discarded data packet.

In one embodiment, the diagnosis device 180 may generate and output a report according to the report received from the master receiver 161. The report outputted by the diagnosis device 180 may indicate the occurrence of the header error corresponding to the discarded data packet.

With redundant routes, the possibility of missed updates of database can be minimized. However, the possibility in the real word will never be zero. To check for the unacknowledged error, database 110 may generate an event log (also referred to as "first event log") and transmit the event log to the filter 140 periodically, wherein the first event log may be associated with the data packet transmitted between the database 110 and the client 120. The filter 140 may forward the first event log of the database 110 to the database 170 via redundant routes by a mechanism similar to that of forwarding the data packet to the database 170. In one embodiment, the database 110 may generate or transmit the first event log in response to receiving a request from the filter 140, wherein the filter 140 may send the request to the database 110 periodically.

On the other hand, the database 170 may generate an event log (also referred to as "second event log") periodically, wherein the second event log may be associated with the data packet received by the database 170. In response to receiving the first event log from the master receiver 161, the database 170 may generate and output (to the diagnosis device 180 or other electronic device) a report associated with the comparison result between the first event log and the second event log. Any discrepancies between the first event log and the second event log may be alerted to the diagnosis device 180 via the report for manual assessment or remediation, if needed.

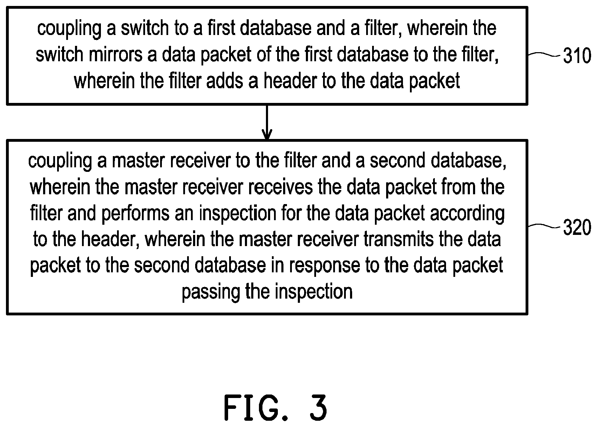

FIG. 3 illustrates a flowchart of a method of database replication according to an embodiment of the disclosure, wherein the method may be implemented by the database system 100 as shown in FIG. 1. In step 310, coupling a switch to a first database and a filter, wherein the switch mirrors a data packet of the first database to the filter, wherein the filter adds a header to the data packet. In step 320, coupling a master receiver to the filter and a second database, wherein the master receiver receives the data packet from the filter and performs an inspection for the data packet according to the header, wherein the master receiver transmits the data packet to the second database in response to the data packet passing the inspection.

In summary, the disclosure provides a method for transmitting database update information via redundant one-way link circuits, so that the security in unsecured site can be preserved while the reliability of the data transmission is maximized. The update information transmitted between the client and the database in the secured site may be obtained by the filter at TCP/IP level, thus the filter does not need the capability to interpret the update information in the database format. The filter may send a header-added packet or a redundant packet to a receiver in the unsecured site to enable the data inspection at the receiver. The header in each of the packet may include a sequence number. The receiver may check if any packet of a data stream is lost based on the sequence number. The received packet may be forwarded to the replicate database only after the integrity of the packet is confirmed. Comparison of the event log from the database in the secured site and the event log from the database in the unsecured site may further insure database parity.

## Claims

1. A database system (100) for database replication, **characterized in that**, comprising:
a first database (110);
a filter (140);
a switch (130), coupled to the first database (110) and the filter (140), wherein the switch (130) mirrors a data packet of the first database (110) to the filter (140), wherein the filter (140) adds a header to the data packet;
a second database (170); and
a master receiver (161), coupled to the filter (140) and the second database (170), wherein the master receiver (161) receives the data packet from the filter (140) and performs an inspection for the data packet according to the header, wherein the master receiver (161) transmits the data packet to the second database (170) in response to the data packet passing the inspection.

2. The database system of claim 1, wherein the master receiver (161) receives the data packet from the filter (140) via a first one-way link circuit (151).

3. The database system (100) of claim 1, further comprising:
a slave receiver (162), coupled to the filter (140) and the master receiver (161), wherein the filter (140) generates a redundant data packet of the data packet with the header, wherein the slave receiver (162) receives the redundant data packet from the filter and forwards the redundant data packet to the master receiver (161).

4. The database system (100) of claim 3, wherein the master receiver (161) transmits the redundant data packet to the second database (170) in response to the data packet failing the inspection.

5. The database system (100) of claim 4, wherein the master receiver (161) performs a second inspection for the redundant data packet and transmits the redundant data packet to the second database (170) in response to the redundant data packet passing the second inspection.

6. The database system (100) of claim 5, wherein the master receiver (161) discards the redundant data packet in response to the redundant data packet failing the second inspection.

7. The database system (100) of claim 3, wherein the master receiver (161) receives the redundant data packet from the filter (140) via a second one-way link circuit (152).

8. The database system (100) of claim 1, wherein the master receiver (161) discards the data packet in response to the data packet failing the inspection, wherein the database system (100) further comprising:
a diagnosis device (180), coupled to the master receiver (161), wherein the diagnosis device (180) receives the data packet discarded by the master receiver (161) and outputs a report according to the data packet.

9. The database system (180) of claim 1, wherein the header comprises a sequence number corresponding to a data stream, wherein the master receiver (161) performs the inspection according to the sequence number.

10. The database system (100) of claim 1, wherein the first database (110) generates a first event log associated with the data packet and transmits the first event log to the second database (170), wherein the second database (170) generates a second event log associated with the data packet and outputs a report associated with a comparison result between the first event log and the second event log.

11. The database system (100) of claim 1, wherein the master receiver (161) removes the header from the data packet before transmitting the data packet to the second database (170).

12. The database system (100) of claim 1, wherein the switch (130) transmits the data packet to the filter (140) via a physical layer port, wherein the filter (140) transmits the data packet with header to the first one-way link circuit (151) via the physical layer port.

13. A method of database replication, **characterized in that**, comprising:
coupling a switch to a first database and a filter, wherein the switch mirrors a data packet of the first database to the filter, wherein the filter adds a header to the data packet (310); and
coupling a master receiver to the filter and a second database, wherein the master receiver receives the data packet from the filter and performs an inspection for the data packet according to the header, wherein the master receiver transmits the data packet to the second database in response to the data packet passing the inspection (320).

## Amended claims

### Amended claims in accordance with Rule 137(2) EPC.

1. A database system (100) for database replication, **characterized in that**, comprising:
a first database (110);
a filter (140);
a switch (130), coupled to the first database (110) and the filter (140), wherein the switch (130) mirrors a data packet of the first database (110) to the filter (140), wherein the filter (140) adds a header to the data packet; and
a second database (170);
**characterized by**
a master receiver (161), coupled to the filter (140) and the second database (170), wherein the master receiver (161) receives the data packet from the filter (140) via a first one-way link circuit (151) and performs an inspection for the data packet according to the header, wherein the master receiver (161) transmits the data packet to the second database (170) in response to the data packet passing the inspection,
wherein the filter (140) generates a redundant data packet of the data packet with the header,
wherein the master receiver (161) receives the redundant data packet via a second one-way link circuit (152),
wherein the master receiver (161) performs a second inspection for the redundant data packet in response to the data packet failing the inspection and transmits the redundant data packet to the second database (170).

2. The database system (100) of claim 1, further comprising:
a slave receiver (162), coupled to the filter (140) and the master receiver (161), wherein the slave receiver (162) receives the redundant data packet from the filter (140) and forwards the redundant data packet to the master receiver (161).

3. The database system (100) of claim 2, wherein the master receiver (161) transmits the redundant data packet to the second database (170) in response to the data packet failing the inspection.

4. The database system (100) of claim 3, wherein the master receiver (161) transmits the redundant data packet to the second database (170) in response to the redundant data packet passing the second inspection.

5. The database system (100) of claim 4, wherein the master receiver (161) discards the redundant data packet in response to the redundant data packet failing the second inspection.

6. The database system (100) of claim 1, wherein the master receiver (161) discards the data packet in response to the data packet failing the inspection, wherein the database system (100) further comprising:
a diagnosis device (180), coupled to the master receiver (161), wherein the diagnosis device (180) receives the data packet discarded by the master receiver (161) and outputs a report according to the data packet.

7. The database system (180) of claim 1, wherein the header comprises a sequence number corresponding to a data stream, wherein the master receiver (161) performs the inspection according to the sequence number.

8. The database system (100) of claim 1, wherein the first database (110) generates a first event log associated with the data packet and transmits the first event log to the second database (170), wherein the second database (170) generates a second event log associated with the data packet and outputs a report associated with a comparison result between the first event log and the second event log.

9. The database system (100) of claim 1, wherein the master receiver (161) removes the header from the data packet before transmitting the data packet to the second database (170).

10. The database system (100) of claim 1, wherein the switch (130) transmits the data packet to the filter (140) via a physical layer port, wherein the filter (140) transmits the data packet with header to the first one-way link circuit (151) via the physical layer port.

11. A method of database replication, comprising:
coupling a switch to a first database and a filter, wherein the switch mirrors a data packet of the first database to the filter, wherein the filter adds a header to the data packet (310) and generates a redundant data packet of the data packet with the header; and
coupling a master receiver to the filter and a second database, wherein the master receiver receives the data packet from the filter via a first one-way link circuit (151) and performs an inspection for the data packet according to the header, wherein the master receiver transmits the data packet to the second database in response to the data packet passing the inspection (320), wherein the master receiver receives the redundant data packet from the filter (140) via a second one-way link circuit. wherein the master receiver performs a second inspection for the redundant data packet in response to the data packet failing the inspection and transmits the redundant data packet to the second database.
